# EUROPEAN PATENT SPECIFICATION

(11) **EP 4 279 301 B1**
(45) Date of publication and mention of the grant of the patent: **18.09.2024**
(21) Application number: 23166728.8
(22) Date of filing: 05.04.2023
(51) Int. Cl.: B60H 1/00, B60H 1/32, B60H 3/02

(54) **APPARATUS**
GERÄT
APPAREIL

(30) Priority: 18.05.2022 GB 202207230
(43) Date of publication of application: 22.11.2023
(73) Proprietor: AGCO International GmbH, 8212 Neuhausen am Rheinfall (CH)
(72) Inventor: SIVULA, Mika Juhani, 44200 Suolahti (FI)
(74) Representative: AGCO Intellectual Property Department

(56) References cited:
- DE-A1- 3 344 697
- FR-A1- 2 772 668
- JP-A- S5 679 011

## Description

### FIELD

The present invention relates to an apparatus for heating an operator's cab of a vehicle or machine and to a method of operating said apparatus. **The** apparatus includes arrangements for the removal of moisture from warm air before it is distributed into the operator's cab, the warm air may be air recirculated from within the cab and/or external air heated by a heating unit. The apparatus and the method have been primarily devised for use on vehicle cabs such as those used on tractors and construction machines but the invention is also applicable to cabs for use on other machinery such as combines, forage harvesters, sprayers and cranes.

### BACKGROUND

Typically problems arise when the moisture in warm air entering a cab condenses on cab windows and other cold surfaces affecting visibility. Various attempts have been made to try to ease this problem by heating the windows, either by blowing hot air onto the window glass or by heating the windows directly. Direct heating of windows has proved expensive to implement and compromises visibility whilst the use of hot air also heats the cab resulting in the cab becoming uncomfortable for the operator. Attempts have also be made to use air conditioning systems for cabs to remove the moisture but this has also proved expensive to implement and is temperature dependant.

Each of documents FR 2 772 668 A1, DE 33 44 697 A1 and JP S56 79011 A discloses an apparatus for heating an operator's cab of a vehicle or machine according to the precharacterizing portion of claim 1. In each case, external air and air being recirculated from the cab are passed through a heat exchanger upstream of a cab air heating unit such that moisture in the recirculating air is condensed.

It is an object of the present invention to provide an apparatus for heating an operator's cab of a vehicle or machine, assuring a removal of moisture from warm air prior to the warm air entering the cab which is relatively cheap to implement and also efficient in operation.

### BRIEF SUMMARY

In accordance with the present invention there is provided an apparatus for heating an operator's cab of a vehicle or machine and a method of operating said apparatus as set out in the independent claims 1 and 13. Preferred embodiments of the present invention are laid down in the appended dependent claims.

In one aspect, the invention provides an apparatus for heating an operator's cab of a vehicle or machine, the apparatus comprising a cab air heating unit, a tr cab air duct for conducting air toward an interior region of the cab from the cab air heating unit, and an external air intake for conducting external air to an inlet side of the cab air heating unit, the external air intake including a condensing conduit extending through at least part of the cab air duct.

In use, external air passing through the condensing conduit cools the conduit to a temperature below that of the, usually warm, air flowing through the cab air duct, so that moisture in the warm air condenses on the exterior surface of the conduit before entering the cab. Such an arrangement provides a particularly simple but efficient way to remove moisture from the warm air before it enters the cab. The warm air may be air heated by the cab air heating unit which is passed through the cab air duct and/or it may be air from within the cab recirculated through the cab air duct and back into the cab.

The apparatus may comprise a blower arrangement for drawing external air in through the external air intake and moving air through the cab air heating unit and the cab air duct toward the interior region of the cab.

The external air intake may be a moisture removal external air intake and the apparatus may have a further external air intake which does not pass through the cab air duct and an air flow valve operable to enable external air to be selectively drawn through the cab air heating unit from the moisture removal external air intake and/or from the further external air intake.

By operation of the air flow valve, the apparatus can be operated in a moisture removal mode in which external air is directed into the heating unit through the condensing conduit or in a non-moisture removal mode in which external air is directed into the heating unit through the further external air intake. The non-moisture removal mode might be adopted when the external temperature is very low so that the cold air does not limit the heating capacity of the heating apparatus excessively. The air flow valve could also be operated in a mixed-mode in which some external air is drawn in through both the moisture removal external air intake and the further external air intake.

The air flow valve may be manually actuatable or it may be automatically actuatable. The air flow valve may be controlled automatically in response to at least one predetermined operating parameter, such as any one or more of the following: temperature of the condensing conduit, outside temperature i.e. the temperature external of the cab, temperature in the interior of the cab, and humidity of the interior of the cab.

The apparatus may be configured to remove moisture from air recirculated from the interior region of the operator's cab, the apparatus having a recirculation duct through which air from within the interior region of the cab can be drawn to be mixed with external air drawn in through the external air intake for passage back to the cab through the cab air duct. The flow of external air and/or recirculated air through the cab air heating unit may be regulated by the air flow valve and/or by a further air flow valve. A recirculation air duct through which air drawn from within the cab can flow to the cab air heating unit may be connected with an input side of the cab air heating unit downstream of the air flow valve and a recirculation valve provided to direct either recirculated air or external air or a mixture of the two through the cab air heating unit.

The apparatus may include at least one air filter for filtering external air drawn through the moisture removal air intake duct and/or the further external air intake duct.

The apparatus may be part of a HVAC system.

The apparatus may have a condensate collection and removal system for collecting and removing condensate which forms on a surface of the condensing conduit in use. The condensate collection and removal system may be configured to collect condensate which forms on a surface of the condensing conduit in use and remove the condensate to the outside of the cab air duct. The condensate collection and removal system may comprise a condensate duct extending to the exterior of the cab air duct.

At least part of the condensing conduit may be inclined to the horizontal and the condensate collection and removal system may be configured such that condensate forming on at least part of a surface of the condensing conduit flows downwardly towards the condensate collection and removal system.

According to a further aspect of the invention, there is provided a method of operating an apparatus according to the previously mentioned aspect of the invention, the method comprising: operating the apparatus in a moisture removal mode in which external air is drawn into the cab air heating unit through the moisture removal external air intake whilst air heated by the cab air heating unit is passed through the cab air duct, such that the temperature of the condensing conduit is lowered below that of the heated air to cause moisture in the heated air to condense onto the condensing conduit.

Where the apparatus has a further external air intake and an air flow valve, the method may comprise selectively operating the apparatus in a non-moisture removal mode in which external air is drawn into the cab air heating unit through the further external air intake whilst air heated by the cab air heating unit is passed through the cab air duct.

### BRIEF DESCRIPTION OF THE DRAWINGS

One or more embodiments of the invention will now be described, by way of example only, with reference to the accompanying drawings, in which:
FIG. 1 shows an agricultural tractor having a cab and which is fitted with an apparatus for removing moisture from air prior to it being introduced into a cab;
FIG. 2 shows a diagrammatic view of details of an embodiment of apparatus for removing moisture from air prior to it being introduced into a cab, wherein the apparatus is part of a cab heating apparatus and is shown operating in a non-moisture removal mode;
FIG. 3 shows the apparatus of FIG. 2 in a moisture removing mode; and
FIG. 4 shows a diagrammatic view of details of a modified embodiment of the apparatus of FIGs. 2 and 3 including a recirculation duct for recirculating air from the cab.

### DETAILED DESCRIPTION

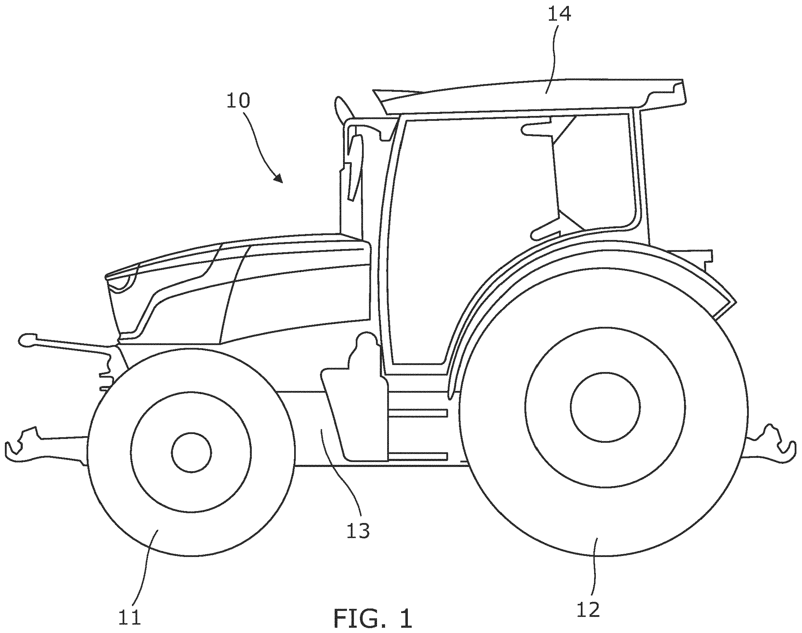

Referring to Fig. 1 this shows an agricultural tractor 10 having wheels 11 and 12, a chassis 13 and a cab 14. The tractor is fitted with apparatus 15 for removing moisture from air before it is distributed into the cab.

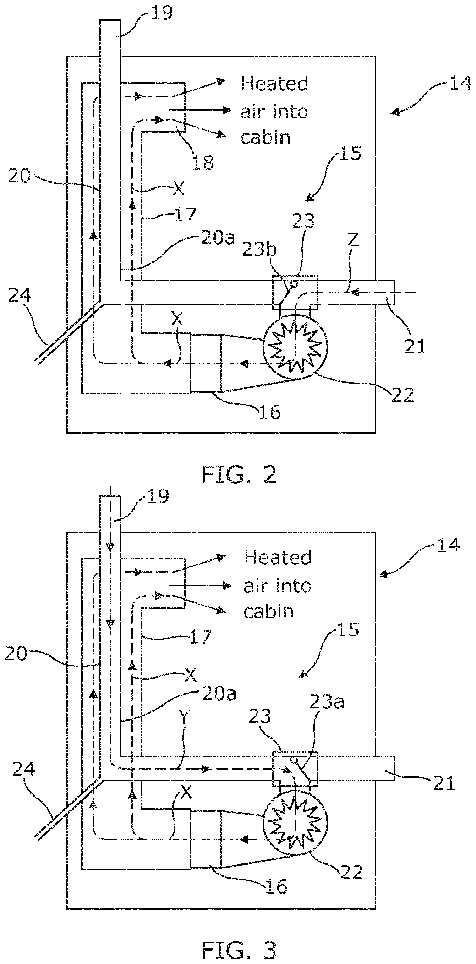

An embodiment of the apparatus 15 for removing moisture from air before it is distributed into the cab and which is part of a heating apparatus for the cab is shown diagrammatically in FIGS. 2 and 3. The apparatus includes a cab air heating unit 16 and a cab air duct 17 along which air (indicated by arrows X) heated by the cab air heating unit 16 is delivered into the cab 14 via an outlet 18. The apparatus 15 includes two external air intakes through which external air (i.e. air external to the cab) can be drawn to pass through the cab air heating unit 16 and the cab air duct 17. A first external air intake 19 will be referred to as a moisture removal external air intake and includes a condensing conduit 20, part of which passes through the cab air duct 17. A second external air intake 21 will be referred to as a further external air intake and does not pass through the cab air duct.

The moisture removal external air intake 19 and the further external air intake 21 are fluidly connected with an inlet side of a fan (blower) 22 forming part of the cab air heating unit 16 by a three-way air flow valve 23. The air flow valve 23 is operative in use to selectively connect the further external air intake 21 to the inlet side of the fan as shown in FIG. 2 or the moisture removal external air intake 19 to the inlet side of the fan as shown in FIG. 3.

The apparatus 15 can be operated in a moisture removal mode as illustrated in FIG. 3. In this mode, the air flow valve 23 is moved to position 23a and external air is drawn into the cab air heating unit 16 through the moisture removal external air intake 19 as indicated by the arrows Y. In this mode of operation, the external air Y passing through the moisture removal external air intake 19 will tend to reduce the temperature of the external surface 20a of the condensing conduit 20 below that of the heated air X surrounding it in the cab air duct 17. The external surface of the conduit will therefore act as a condensation surface on which moisture in the heated air on its way to the cab 14 condenses before reaching the cab 14.

The apparatus 15 may also include a condensate collection and removal system for collecting condensate which forms on the outer surface of the conduit 20 and removing the condensate from the cab air duct 17. In the present embodiment, part of the cab air duct 17 is aligned generally vertically and a portion of the conduit 20 within the cab air duct is also aligned vertically. The condensate collection and removal system includes a condensate duct 24 at a lower end of the vertical portion of the conduit through which condensate can flow under the influence of gravity out of the cab air duct 17. As illustrated, the condensate duct 24 may be inclined downwardly and may extend externally of the cab 14 so that condensate can be dispensed to a suitable drainage point and into the external environment. Alternatively, the condensate duct 24 could direct condensate to a condensate reservoir (e.g., a tank or bottle) which can be periodically emptied. The condensate collection and removal system could include a trough which encircles the lower end of the conduit 20 arranged so that condensate can flow down the exterior surface 20a of the conduit into the trough which feeds into the condensate duct 24. It will be appreciated that the cab air duct 17 and the conduit 20 need not be aligned vertically but could be inclined at an alternative angle to the horizontal, provided condensate forming on the exterior surface 20a of the conduit 20 tends to flow downwardly towards the condensate collection and removal system.

The apparatus can alternatively be operated in a non-moisture removal mode as illustrated in FIG. 2. In this mode of operation, the air flow valve 23 is placed in position 23b and external air is drawn into the cab air heating unit 16 through the further external air intake 21 as indicated by the arrows Z. In the non-moisture removal mode the apparatus 15 acts in a largely conventional manner to introduce heated external air into the cab 14. The apparatus 15 may be operated in the non-moisture removal mode when moisture removal in not required and/or when the external temperature is very low so as not to unduly compromise the capacity of the apparatus 15 to heat the cab 14.

The apparatus 15 can also be operated in a mixed-mode in which the air flow valve 23 is configured to allow external air to be drawn though both of the external air intakes 19, 21 at the same time.

The air flow valve 19 may be controlled manually by the operator to switch between the moisture removal and non-moisture removal modes as required. Alternatively, the airflow valve may be controlled automatically in response to at least one predetermined operating parameter. This might include any one or more of the following: the temperature of the condensing conduit (this could be the temperature of the exterior surface of the conduit in this embodiment), outside temperature (i.e. the temperature external of the cab), temperature in the interior of the cab, and humidity of the interior of the cab.

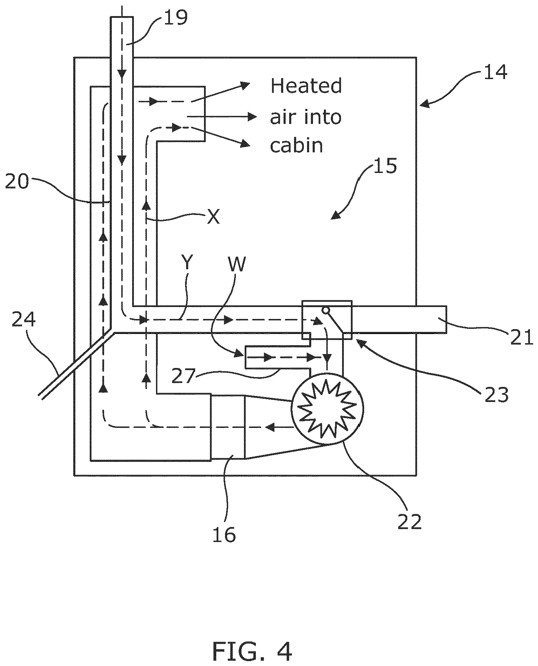

As illustrated in FIG. 4, the apparatus 15 may also have a recirculation air intake 27 through which air from within the cab 14 can be recirculated back through the cab air heating unit 16 and cab air duct 17. In the embodiment illustrated, the recirculation air intake 27 comprises a recirculation air duct through which air drawn from within the cab 14 (as indicated by the arrows W) flows to the cab air heating unit 16 is fluidly connected with an input side of the fan 22 downstream of the air flow valve 23. Although not illustrated, a recirculation air valve arrangement can be provided to direct either recirculated air or external air or a mixture of the two through the cab air heater unit 16. The recirculation air valve may be operable to regulate the proportions of external and recirculated air in the mixture.

This recirculating air arrangement is beneficial since moisture from within the cab 14 (e.g. from wet boots and/or clothing etc.) can be removed. Usually at least some external air Y will be drawn through the moisture removal external air intake 19 to mix with the recirculated air W and the mixed air heated as it passes through the cab air heating unit 16. However, where the air temperature within the cab 14 is sufficiently high and the external air is sufficient cold to create a condensation point on the condensing conduit 20 within the cab air duct 17, moisture can be removed from recirculated air W without using the cab air heating unit 16 to heat the recirculated air W.

The apparatus 15 may be part of a HVAC system.

The apparatus 15 may include at least one air filter for filtering external air drawn through the moisture removal air intake duct and/or the further external air intake duct.

The present invention provides an arrangement for removing moisture from warm air, which may be air heated by an air heating apparatus or already warm air recirculated from the within the cab, before it is distributed into an operator's cab which does not require expensive parts and can thus be implemented on lower specification vehicles and machines without significantly impacting costs.

Various modifications to the embodiments shown can be made within the scope of the invention as defined in the appended claims. For example, an alternative fan arrangement may be adopted the generate the air flow through the external air intakes 19, 21, the cab air heating unit 16 and the cab air duct 17. In embodiments, the fan 22 could be provided downstream of the cab air heating unit 16 and/or separate fans could be provided for the moisture removal external air intake 19 and the further external air intake 21. References to air being "drawn" through any part of the apparatus should not be interpreted as limiting the apparatus to configurations in which air is pulled through that part of the apparatus. It will be appreciated that alternative arrangements in which a fan or blower pushes air through such parts of the system could be adopted.

## Claims

1. Apparatus (15) for heating an operator's cab (14) of a vehicle or machine (10), the apparatus (15) comprising a cab air heating unit (16), a cab air duct (17) for conducting air toward an interior region of the cab (14) from the cab air heating unit (16), and an external air intake (19) for conducting external air to an inlet side of the cab air heating unit (16), **characterized in that** the external air intake (19) includes a condensing conduit (20) extending through at least part of the cab air duct (17).

2. Apparatus (15) as claimed in claim 1, wherein the apparatus (15) is configured such that, in use when an inner surface of the condensing conduit (20) is subject to a flow of external air at a temperature sufficiently below that of the air passing through the cab air duct (17), an outer surface (20a) of the condensing conduit (20) acts as a condensing surface on which moisture in air passing through the cab air duct (17) condenses.

3. Apparatus (15) as claimed in claim 1 or claim 2, further comprising a blower arrangement (22) for drawing external air in through the external air intake (19) and moving air through the cab air heating unit (16) and the cab air duct (17) toward the interior region of the cab (14).

4. Apparatus (15) as claimed in any one of claims 1 to 3, wherein the apparatus (15) has a further external air intake (21) which does not pass through the cab air duct (17) and an air flow valve (23) operable to enable external air to be selectively drawn into the cab air heating unit (16) through the external air intake (19) or through the further external air intake (21).

5. Apparatus (15) as claimed in claim 4, wherein the air flow valve (23) is manually actuatable.

6. Apparatus (15) as claimed in claim 4, wherein the air flow valve (23) is automatically actuatable.

7. Apparatus (15) as claimed in claim 6, wherein the air flow valve (23) is controlled automatically in response to at least one predetermined operating parameter, such as any one or more of the following: temperature of the condensing conduit (20), outside temperature i.e. the temperature external of the cab (14), temperature in the interior of the cab (14), and humidity of the interior of the cab (14).

8. Apparatus (15) as claimed in any one of the preceding claims, wherein the apparatus (15) is configured to remove moisture from air recirculated from the interior region of the operator's cab (14), the apparatus (15) having a recirculation duct (27) through which air from within the interior region of the cab (14) can be drawn to be mixed with external air drawn in through the external air intake (19) for passage back to the cab (14) through the cab air duct (17).

9. Apparatus (15) as claimed in any one of the preceding claims, wherein the apparatus (15) further comprises a condensate collection and removal system (24) for collecting and removing condensate which forms on a surface (20a) of the condensing conduit (20) in use.

10. Apparatus (15) as claimed in claim 9, wherein the condensate collection and removal system (24) is configured to collect condensate which forms on a surface (20a) of the condensing conduit (20) in use and remove the condensate to the outside of the cab air duct (17).

11. Apparatus (15) as claimed in claim 9 or claim 10, wherein the condensate collection and removal system (24) comprises a condensate duct (24) extending to the exterior of the cab air duct (17).

12. Apparatus (15) as claimed in any one of claims 9 to 11, in which at least part of the condensing conduit (20) is inclined to the horizontal and the condensate collection and removal system (24) is configured such that condensate forming on an outer surface (20a) of the condensing conduit (20) flows downwardly towards the condensate collection and removal system (24).

13. A method of operating an apparatus (15) for heating an operator's cab (14) of a vehicle or machine (10) as claimed in any one of the preceding claims, the method comprising: operating the apparatus (15) in a moisture removal mode in which external air is drawn into the cab air heating unit (16) though the external air intake (19) whilst air heated by the cab air heating unit (16) is passed through the cab air duct (17), such that the temperature of the condensing conduit (20) is lowered below that of the heated air so as to cause moisture in the heated air to condense onto the condensing conduit (20).

14. A method as claimed in claim 13, wherein the apparatus (15) is an apparatus as claimed in claim 4, or as claimed in any one of claims 5 to 12 when dependent on claim 4, wherein the method further comprises selectively operating the apparatus(15) in a non-moisture removal mode in which external air is drawn into the cab air heating unit (16) through the further external air intake (21) whilst air heated by the cab air heating unit (16) is passed through the cab air duct (17).

## Patentansprüche

1. Gerät (15) zum Heizen einer Bedienerkabine (14) eines Fahrzeugs oder einer Maschine (10), wobei das Gerät (15) eine Kabinenluftheizeinheit (16), einen Kabinenluftkanal (17) zum Leiten von Luft von der Kabinenluftheizeinheit (16) zu einem inneren Bereich der Kabine (14) und einen externen Lufteinlass (19) zum Leiten von externer Luft zu einer Einlassseite der Kabinenluftheizeinheit (16) aufweist, **dadurch gekennzeichnet, dass** der externe Lufteinlass (19) eine Kondensationsleitung (20) umfasst, die sich durch zumindest einen Teil des Kabinenluftkanals (17) erstreckt.

2. Gerät (15) nach Anspruch 1, wobei das Gerät (15) so eingerichtet ist, dass im Betrieb, wenn eine innere Oberfläche der Kondensationsleitung (20) einem Strom externer Luft mit einer Temperatur, die ausreichend unter derjenigen der durch den Kabinenluftkanal (17) strömenden Luft liegt, ausgesetzt ist, eine äußere Oberfläche (20a) der Kondensationsleitung (20) als eine Kondensationsoberfläche wirkt, an welcher Feuchtigkeit in der durch den Kabinenluftkanal (17) strömenden Luft kondensiert.

3. Gerät (15) nach Anspruch 1 oder 2, weiterhin mit einer Ventilator- oder Gebläseanordnung (22) zum Saugen von externer Luft durch den externen Lufteinlass (19) und Bewegen von Luft durch die Kabinenluftheizeinheit (16) und den Kabinenluftkanal (17) zu dem inneren Bereich der Kabine (14).

4. Gerät (15) nach einem der Ansprüche 1 bis 3, wobei das Gerät (15) einen weiteren externen Lufteinlass (21), welcher nicht durch den Kabinenluftkanal (17) verläuft, und ein Luftströmungsventil (23) hat, das betätigbar ist, um zu ermöglichen, dass externe Luft selektiv durch den externen Lufteinlass (19) oder durch den weiteren externen Lufteinlass (21) in die Kabinenluftheizeinheit (16) gesaugt wird.

5. Gerät (15) nach Anspruch 4, wobei das Luftströmungsventil (23) manuell betätigbar ist.

6. Gerät (15) nach Anspruch 4, wobei das Luftströmungsventil (23) automatisch betätigbar ist.

7. Gerät (15) nach Anspruch 6, wobei das Luftströmungsventil (23) automatisch in Antwort auf mindestens einen vorbestimmten Betriebsparameter (wie bspw. eine Temperatur der Kondensationsleitung (20) und/oder eine Außentemperatur, das heißt die Temperatur außerhalb der Kabine (14), und/oder eine Temperatur in dem Inneren der Kabine (14) und/oder eine Feuchtigkeit des Inneren der Kabine (14)) gesteuert ist.

8. Gerät (15) nach einem der vorhergehenden Ansprüche, wobei das Gerät (15) ausgebildet ist, Feuchtigkeit aus der aus dem inneren Bereich der Bedienerkabine (14) zurückgeführten Luft zu beseitigen, wobei das Gerät (15) eine Rückführleitung (27) aufweist, durch welche Luft von innerhalb des inneren Bereichs der Kabine (14) gesaugt werden kann, um mit externer Luft gemischt zu werden, die durch den externen Lufteinlass (19) für ein Zurückströmen durch den Kabinenluftkanal (17) zu der Kabine (14) gesaugt wird.

9. Gerät (15) nach einem der vorhergehenden Ansprüche, wobei das Gerät (15) weiterhin ein Kondensat-Sammlungs- und Beseitigungssystem (24) zum Sammeln und Beseitigen von Kondensat, welches sich im Betrieb auf einer Oberfläche (20a) der Kondensationsleitung (20) bildet, aufweist.

10. Gerät (15) nach Anspruch 9, wobei das Kondensat-Sammlungs- und Beseitigungssystem (24) ausgebildet ist, Kondensat zu sammeln, welches sich auf einer Oberfläche (20a) der Kondensationsleitung (20) im Betrieb bildet, und das Kondensat in die Umgebung des Kabinenluftkanals (17) zu beseitigen.

11. Gerät (15) nach Anspruch 9 oder 10, wobei das Kondensat-Sammlungs- und Beseitigungssystem (24) einen Kondensatkanal (24) aufweist, der sich zu dem Äußeren des Kabinenluftkanals (17) erstreckt.

12. Gerät (15) nach einem der Ansprüche 9 bis 11, in welchem zumindest ein Teil der Kondensationsleitung (20) relativ zu der Horizontalen geneigt ist und das Kondensat-Sammlungs- und Beseitigungssystem (24) so ausgebildet ist, dass sich auf einer äußeren Oberfläche (20a) der Kondensationsleitung (20) bildendes Kondensat herab zu dem Kondensat-Sammlungs- und Beseitigungssystem (24) fließt.

13. Verfahren zum Betrieb eines in einem der vorausgehenden Ansprüche beanspruchten Geräts (15) zum Heizen einer Bedienerkabine (14) eines Fahrzeugs oder einer Maschine (10), wobei das Verfahren aufweist:
Betreiben des Geräts (15) in einem Feuchtigkeitsbeseitigungsmodus, in welchem externe Luft durch den externen Lufteinlass (19) in die Kabinenluftheizeinheit (16) gesaugt wird, während von der Kabinenluftheizeinheit (16) geheizte Luft durch den Kabinenluftkanal (17) strömt, so dass die Temperatur der Kondensationsleitung (20) unter die der geheizten Luft gesenkt wird, um zu verursachen, dass Feuchtigkeit in der geheizten Luft auf der Kondensationsleitung (20) kondensiert.

14. Verfahren nach Anspruch 13, wobei das Gerät (15) ein Gerät nach Anspruch 4 oder nach einem der Ansprüche 5 bis 12 bei Rückbeziehung auf Anspruch 4 ist, wobei das Verfahren weiterhin ein selektives Betreiben des Geräts (15) in einem Nicht-Feuchtigkeitsbeseitigungsmodus aufweist, in welchem externe Luft durch den weiteren externen Lufteinlass (21) in die Kabinenluftheizeinheit (16) gesaugt wird, während von der Kabinenluftheizeinheit (16) geheizte Luft durch den Kabinenluftkanal (17) strömt.

## Revendications

1. Dispositif (15) destiné à chauffer une cabine d'opérateur (14) d'un véhicule ou machine (10), le dispositif (15) comprenant une unité de chauffage d'air de cabine (16), un conduit d'air de cabine (17) destiné à acheminer de l'air vers une zone interne de la cabine (14) à partir de l'unité de chauffage d'air de cabine (16) et un orifice d'entrée d'air externe (19) destiné à acheminer de l'air externe vers un côté d'entrée de l'unité de chauffage d'air de cabine (16), **caractérisé en ce que** l'orifice d'entrée d'air externe (19) comporte un conduit de condensation (20) s'étendant à travers au moins une partie du conduit d'air de cabine (17).

2. Dispositif (15) selon la revendication 1, dans lequel le dispositif (15) est configuré de telle sorte que, en utilisation, lorsqu'une surface interne du conduit de condensation (20) est soumise à un écoulement d'air externe présentant une température suffisamment inférieure à celle de l'air passant par le conduit d'air de cabine (17), une surface externe (20a) du conduit de condensation (20) agit en tant que surface de condensation sur laquelle l'humidité de l'air passant par le conduit d'air de cabine (17) est condensée.

3. Dispositif (15) selon la revendication 1 ou 2, comprenant, en outre, un agencement de ventilation (22) afin d'aspirer de l'air externe par l'orifice d'entrée d'air externe (19) et de déplacer l'air à travers l'unité de chauffage d'air de cabine (16) et le conduit d'air de cabine (17) vers la zone intérieure de la cabine (14).

4. Dispositif (15) selon l'une quelconque des revendications 1 à 3, dans lequel le dispositif (15) comporte un orifice d'entrée d'air externe supplémentaire (21) qui ne passe pas par le conduit d'air de cabine (17) et une vanne de circulation d'air (23) qui peut être utilisée afin de permettre l'aspiration de manière sélective de l'air externe dans l'unité de chauffage d'air de cabine (16) à travers l'orifice d'entrée d'air externe (19) ou à travers l'orifice d'entrée d'air externe supplémentaire (21).

5. Dispositif (15) selon la revendication 4, dans lequel la vanne de circulation d'air (23) peut être activée manuellement.

6. Dispositif (15) selon la revendication 4, dans lequel la vanne de circulation d'air (23) peut être activée automatiquement.

7. Dispositif (15) selon la revendication 6, dans lequel la vanne de circulation d'air (23) est commandée automatiquement en réponse à au moins un paramètre opérationnel prédéterminé, tel que l'un quelconque ou plusieurs des paramètres suivants : la température du conduit de condensation (20), la température extérieure c'est-à-dire, la température à l'extérieur de la cabine (14), la température à l'intérieur de la cabine (14) et l'humidité à l'intérieur de la cabine (14).

8. Dispositif (15) selon l'une quelconque des revendications précédentes, dans lequel le dispositif (15) est configuré de manière à éliminer l'humidité de l'air recyclé à partir de la zone intérieure de la cabine d'opérateur (14), le dispositif (15) comportant un conduit de recyclage (27) par lequel de l'air provenant de l'intérieur de la zone intérieure de la cabine (14) peut être aspiré de manière à être mélangé à de l'air externe aspiré à travers l'orifice d'entrée d'air externe (19) afin d'assurer le retour vers la cabine (14) par le conduit d'air de cabine (17).

9. Dispositif (15) selon l'une quelconque des revendications précédentes, dans lequel le dispositif (15) comprend, en outre, un dispositif de collecte et d'élimination de condensat (24) afin de collecter et d'éliminer le condensat qui se forme sur une surface (20a) du conduit de condensation (20) pendant l'utilisation.

10. Dispositif (15) selon la revendication 9, dans lequel le dispositif de collecte et d'élimination de condensat (24) est configuré de manière à collecter le condensat qui se forme sur une surface (20a) du conduit de condensation (20) pendant l'utilisation et élimine le condensat à l'extérieur du conduit d'air de cabine (17).

11. Dispositif (15) selon la revendication 9 ou 10, dans lequel le dispositif de collecte et d'élimination de condensat (24) comprend un conduit de condensat (24) s'étendant à l'extérieur du conduit d'air de cabine (17).

12. Dispositif (15) selon l'une quelconque des revendications 9 à 11, dans lequel au moins une partie du conduit de condensation (20) est inclinée par rapport à l'horizontale et le dispositif de collecte et d'élimination de condensat (24) est configuré de telle sorte que le condensat se formant sur une surface externe (20a) du conduit de condensation (20) s'écoule vers le bas, vers le dispositif de collecte et d'élimination de condensat (24).

13. Procédé d'activation d'un dispositif (15) destiné à chauffer une cabine d'opérateur (14) d'un véhicule ou machine (10) selon l'une quelconque des revendications précédentes, le procédé comprenant : l'activation du dispositif (15) dans un mode d'élimination de l'humidité dans lequel de l'air externe est aspiré dans l'unité de chauffage d'air de cabine (16) à travers l'orifice d'entrée d'air externe (19) tandis que de l'air chauffé par l'unité de chauffage d'air de cabine (16) est acheminé par le conduit d'air de cabine (17), de telle sorte que la température du conduit de condensation (20) est abaissée au-dessous de celle de l'air chauffé de manière à provoquer la condensation de l'humidité dans l'air chauffé dans le conduit de condensation (20).

14. Procédé selon la revendication 13, dans lequel le dispositif (15) est un dispositif selon la revendication 4 ou selon l'une quelconque des revendications 5 à 12 lorsqu'elle dépend de la revendication 4, dans lequel le procédé comprend, en outre, l'activation de manière sélective du dispositif (15) dans un mode de non-élimination d'humidité dans lequel de l'air externe est aspiré dans l'unité de chauffage d'air de cabine (16) par l'orifice d'entrée externe supplémentaire (21) tandis que de l'air chauffé par l'unité de chauffage d'air de cabine (16) est acheminé par l'intermédiaire du conduit d'air de cabine (17).
